# EUROPEAN PATENT SPECIFICATION

(11) **EP 1 950 749 B1**
(45) Date of publication and mention of the grant of the patent: **31.03.2010**
(21) Application number: 08000172.0
(22) Date of filing: 07.01.2008
(51) Int. Cl.: G11B 7/013, G11B 7/005, G11B 7/135, G11B 7/125

(54) **Multivalued information reproducing method and multivalued information reproducing apparatus**
Verfahren und Vorrichtung zur Wiedergabe mehrwertiger Informationen
Procédé de reproduction d'informations à plusieurs valeurs et appareil de reproduction d'informations à plusieurs valeurs

(30) Priority: 05.01.2007 JP 2007000509; 02.03.2007 JP 2007053019
(43) Date of publication of application: 30.07.2008
(73) Proprietor: Funai Electric Co., Ltd., Daito-shi Osaka 574-0013 (JP)
(72) Inventor: Takeda, Toru, Daito-shi Osaka 574-0013 (JP); Shihara, Tetsuya, Daito-shi Osaka 574-0013 (JP)
(74) Representative: Beetz & Partner

(56) References cited:
- EP-A- 0 735 529
- WO-A-2006/013556
- US-A- 5 483 508

## Description

### BACKGROUND OF THE INVENTION

### Field of the Invention

The present invention relates to a method for reproducing multivalued information which is recorded in an optical recording medium, and to an apparatus for reproducing multivalued information which is recorded in an optical recording medium.

### Description of Related Art

Recently, demand for recording not only small capacity data such as text or image, but also large capacity data which is represented by moving picture information becomes increasingly strong. To respond the demand, great number of research and development have been performed about method for high density optical recording such as holographic recording and the like in a technical field of optical recording.

As a method to record information with high density utilizing an optical recording medium, there is technology to record multivalued information in the optical recording medium, one of them is disclosed, for example, in JP-A-2004-086948. In JP-A-2004-086948, an optical recording medium is introduced that can record the multivalued information using that polarization characteristic of information pit depends on depth of the information pit. Further, technology that reproduces the multivalued information by irradiating light which has a plurality of polarization states to the optical recording medium, is introduced.

However, the optical recording medium disclosed in JP-A-2004-086948 which is capable of recording the multivalued information, has a problem that it is difficult to perform recording of information utilizing an optical pickup device because it is structured to record the multivalued information by changing the depth of the pit.

WO 2006/013556 A describes a method and a system for encoding and detecting optical information which is stored on an optical storage medium designed to be readable with light of a pre-determined wavelength. The information is described to be stored on the optical storage medium as a function of the one of a plurality of orientations. According to the teaching of WO 2006/013556 A, optically detectably marks that are imprinted on the substrate of the optical storage medium alter the polarization characteristics of an incident polarized light of the pre-determined wavelength, wherein these altered polarization characteristics are detectable by a detector in order to reproduce the information.

### SUMMARY OF THE INVENTION

Because of these, inventers of the present invention now engage to develop an optical recording medium that can record the multivalued information and that is different from the optical recording medium disclosed in JP-A-2004-086948. That is, the inventers are now performing development of an optical recording medium in which, for example, azobenzen based material or the like is used as a recording material of the optical recording medium. In the azobenzen based material large anisotropy is induced in molecule by polarized irradiation. In this optical recording medium, by changing polarization direction of linear polarized light which is used as recording light in response to recording information, the polarization direction is recorded as the multivalued information. As a result, it is an object of the present invention to provide a multivalued information reproducing method and a multivalued information reproducing apparatus which make reproducing of multivalued information possible for an optical recording medium in which the polarization direction of the recording light is recorded as the multivalued information.

To attain the above described object, a multivalued information reproducing apparatus in accordance with the present invention may include in particular: a light source which emits a linear polarized light having a prescribed polarization direction; a first optical system which generates a first linear polarized light and a second linear polarized light that have different polarization directions using the linear polarized light which is emitted from the light source and makes the two polarized lights input to an optical recording medium in which the polarization directions of recording lights are recorded as multivalued information; a second optical system by which light that passes the optical recording medium or light that is reflected by the optical recording medium is directed to a photo detecting portion in a state where the first linear polarized light and the second linear polarized light are separated; and a polarization direction judging portion which judges the polarization direction that is recorded in the optical recording medium based on amount of light of the first linear polarized light and amount of light of the second linear polarized light that are obtained by the photo detecting portion.

By this arrangement, reproducing of the optical recording medium in which the polarization direction of the recording light is recorded as the multivalued information by changing the polarization direction, is performed using two polarized lights that have different polarization direction. As a result, because it is not necessary to set up a polarization hologram element which separates prescribed polarized lights from circular polarized light, it becomes possible to provide a multivalued information reproducing apparatus which is capable of reproducing the multivalued information without utilizing an expensive optical member.

The present invention is preferable that the first optical system makes the first linear polarized light and the second linear polarized light input simultaneously to the optical recording medium in the multivalued information reproducing apparatus structured as above described.

By this arrangement, it becomes possible to structure the multivalued information reproducing apparatus with decreasing members which is necessary to control electrically as little as possible for an optical system that composes the multivalued information reproducing apparatus.

The present invention is preferable that the first optical system includes: a first light separating element which separates the linear polarized light that is emitted from the light source into two lights; a polarization direction converting element which is arranged so as to converts the polarization direction of at least one of the two lights that are separated by the first light separating element and to make one of the two lights be the first linear polarized light and the other of the two lights be the second linear polarized light; an optical axis aligning element which aligns the optical axes of the first linear polarized light and the second linear polarized light; and a light shielding element which is arranged in front of the optical axis aligning element to shield a part of the respective lights such that the first linear polarized light and the second linear polarized light are not superimposed when the optical axes of them are aligned in the multivalued information reproducing apparatus structured as above described.

By this arrangement, it is easy to realize the multivalued information reproducing apparatus which has a structure in that members which is necessary to control electrically is decreased as little as possible.

Further, the present invention is preferable that the second optical system includes a second light separating element which separates the first linear polarized light and the second linear polarized light into different light paths, and the photo detecting portion is composed of two photo detectors that are arranged in different positions in the multivalued information reproducing apparatus structured as above described.

By this arrangement, it becomes possible to structure the multivalued information reproducing apparatus with decreasing member which is necessary to control electrically as little as possible for an optical system that composes the multivalued information reproducing apparatus.

The present invention is preferable that the second optical system directs the first linear polarized light and the second linear polarized light to the photo detecting portion with a time interval in the multivalued information reproducing apparatus structured as above described.

By this arrangement, it is not necessary to separate the light which passes through the optical recording medium or the light which is reflected by the optical recording medium into two directions because the apparatus has a structure in that two polarized lights that have different polarization direction are separated to be directed to the photo detecting portion with a time interval. As a result, it becomes possible to reduce number of the photo detector that the multivalued information reproducing apparatus includes to one, and it is possible to realize down sizing and low cost of the apparatus.

The present invention is preferable that the second optical system includes a liquid crystal element which contains a liquid crystal and two transparent electrodes to sandwich the liquid crystal, and a polarizing plate in the multivalued information reproducing apparatus structured as above described.

By this arrangement, it is easy to realize a structure in that the number of the photo detector which the multivalued information reproducing apparatus includes is one because of the structure in that the two polarized light are separated utilizing the liquid crystal element and the polarizing plate.

The present invention is preferable that the first optical system makes the first linear polarized light and the second linear polarized light input to the optical recording medium with a time interval in the multivalued information reproducing apparatus structured as above described.

By this arrangement, size of the apparatus can be downscaled more than a structure in that the two polarized lights that have different polarization direction are generated after one light is separated into two directions because it has the structure in that the two polarized lights that have different polarization direction are generated with a time interval.

Further it is preferable that the first optical system includes a liquid crystal element which contains a liquid crystal and two transparent electrodes to sandwich the liquid crystal in the multivalued information reproducing apparatus structured as above described.

By this arrangement, it is easy to realize the apparatus because it has a structure in that the liquid crystal element is utilized to obtain the two polarized lights that have different polarization direction from the light source which emits the linear polarized light with a time interval.

Still further, the present invention is preferable that the first linear polarized light and the second linear polarized light have the polarization directions that are orthogonal with each other in the multivalued information reproducing apparatus structured as above described.

By this arrangement, the polarization directions of the two polarized lights which are generated in the first optical system and have different polarization direction are in relation to be orthogonal with each other. Because of this, the polarization direction which is recorded in the optical recording medium is easy to read out with high accuracy, and reliability of the apparatus can be improved.

In addition, to attain the above described object a method to reproduce an optical recording medium on which multivalued information is recorded in accordance with the present invention is proposed. The method may be characterized by including: a first step to irradiate simultaneously or with a time interval a first linear polarized light and a second linear polarized light which have different polarization directions on the optical recording medium in which the polarization directions of recording lights are recorded as multivalued information; a second step to direct light that passes the optical recording medium or light that is reflected by the optical recording medium to a photo detecting portion in a state where the first linear polarized light and the second linear polarized light are separated; and a third step to judge the polarization direction that is recorded in the optical recording medium based on amount of light of the first linear polarized light and amount of light of the second linear polarized light that are obtained by the photo detecting portion.

By these arrangement reproducing of the optical recording medium in which the polarization direction is recorded as the multivalued information by changing the polarization direction of the recording light, is performed using the two polarized lights that have different polarization direction. As a result, because it is not necessary to set up a polarization hologram element which separates prescribed polarized lights from circular polarization, it becomes possible to reproduce the multivalued information with low cost.

### BRIEF DESCRIPTION OF THE DRAWINGS

Fig. 1 is a schematic cross sectional view to show one example of an optical recording medium to which a multivalued information reproducing method in accordance with the present invention is applied.

Fig. 2 is a graph on which values of amount of transmitted light are plotted, that is, after recording light is irradiated at a plurality of positions on an optical recording medium with changing its polarization direction, reproducing lights having a specific polarization direction with respect to the respective recording positions is irradiated and values of amount of transmitted light are obtained for each case.

Fig. 3 is a graph to show dependency on recording angle about a difference of the amount of transmitted light between reproducing angle zero degree and reproducing angle ninety degree.

Fig. 4 is a schematic diagram to show a structure of a multivalued information reproducing apparatus according to first embodiment.

Fig. 5A is a diagram to explain a structure of a first light shielding member which is included in the multivalued information reproducing apparatus according to the first embodiment.

Fig. 5B is a diagram to explain a structure of a second light shielding member which is included in the multivalued information reproducing apparatus according to the first embodiment.

Fig. 5C is a diagram to show distribution of a first linear polarized light and a second linear polarized light in light which is output from a first polarization beam splitter in the multivalued information reproducing apparatus according to the first embodiment.

Fig. 6A is a diagram to show a modification example of the first light shielding member which is included in the multivalued information reproducing apparatus according to the first embodiment.

Fig. 6B is a diagram to show a modification example of the second light shielding member which is included in the multivalued information reproducing apparatus according to the first embodiment.

Fig. 6C is a diagram to show distribution of the first linear polarized light and the second linear polarized light in light which is output from the first polarization beam splitter in a case where the light shielding members shown in Fig. 6A and Fig. 6B are included in the multivalued information reproducing apparatus according to the first embodiment.

Fig. 7 is a schematic diagram to show a structure of a multivalued information reproducing apparatus according to second embodiment.

Fig. 8A is a schematic diagram to explain about a liquid crystal element and a polarizing plate which are included in a second optical system in the multivalued information reproducing apparatus according to the second embodiment.

Fig. 8B is a schematic diagram to explain about a liquid crystal element and a polarizing plate which are included in a second optical system in the multivalued information reproducing apparatus according to the second embodiment.

Fig. 9 is a schematic diagram to show a structure of a multivalued information reproducing apparatus according to third embodiment.

Fig. 10 is a schematic diagram to show a modification example of the multivalued information reproducing apparatus in accordance with the present invention.

### DETAILED DESCRIPTION OF THE PREFERRED EMBODIMENTS

Hereinafter content of the present invention will be described in detail by way of embodiments with reference to drawings. However, these embodiments shown here are mere examples and the present invention as defined in the claims is not limited to these embodiments but also covers other combinations of the features of the embodiments described below.

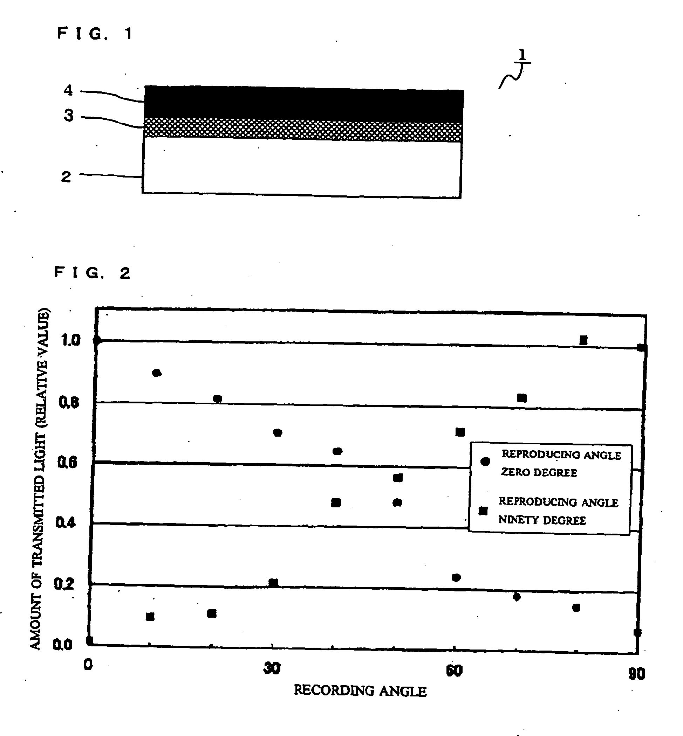

First, an optical recording medium to which a multivalued information reproducing method in accordance with the present invention is applied will be explained. Fig. 1 is a schematic cross sectional view to show one example of an optical recording medium to which a multivalued information reproducing method in accordance with the present invention is applied. This optical recording medium 1 is formed by laminating a recording layer 3 and a protect layer 4 on a substrate 2.

The substrate 2 is a member to support the recording layer 3, it is made by, for example, glass or resin. The recording layer 3 is a layer to record a polarization direction of recording light (linear polarized light) which is input with changing the polarization direction in response to information to be recorded as multivalued information. The recording layer 3 is formed by dispersing, for example, azobenzen based material in a polymer film which has as main component a polymer solid, for example, such as poly methyl methacrylate, polycarbonate, polyvinyl alcohol, and the like.

The protect layer 4 is made to prevent data lost by scratch or dust and it is set up to protect the recording layer 3. As a material to form the protect layer 4, for example, transparent resin such as polycarbonate or the like is used.

A principle by which the multivalued information can be recorded and reproduced in the optical recording medium 1 that is formed as above described, will be explained. After recording light (linear polarized light) is irradiated at a plurality of positions in an optical recording medium 1 with changing its polarization direction (recording angle), reproducing lights having a specific polarization direction (reproducing angle zero degree, ninety degree) with respect to respective recording positions are irradiated, then values of amount of transmitted light (amount of light that passes through the optical recording medium 1) are obtained for each case. Fig. 2 is a graph on which values of amount of transmitted light are plotted.

At this point the recording angle and the reproducing angle in Fig. 2 are reference indices which designate the polarization directions of the linear polarized lights that are used as the recording light and the reproducing light respectively, the recording angle or the reproducing angle is set zero (point of the recording angle zero degree and the reproducing angle zero degree are the same) when a polarization plane of the recording light or the reproducing light become a prescribed direction on a plane that is parallel to a recording surface of the optical recording medium 1, and the recording angle and the reproducing angle correspond to an angle rotated in a prescribed direction from the point.

As shown in Fig. 2, how the amount of transmitted light is varied with respect to the recording angle, is different depending on the reproducing angle (zero degree, ninety degree) of the reproducing light. This is because intensity of the transmitted light of the optical recording medium 1 becomes to show different anisotropy depending on the polarization direction of the recording light when the linear polarized light is irradiated on the optical recording medium 1 as the recording light.

Because of this, after the recording light which has a specific polarization direction is irradiated, circular polarized light, for example, is irradiated to the optical recording medium 1, the light (circular polarized light) that passes through the optical recording medium 1 is divided into a plurality of polarized lights which have different polarization directions respectively utilizing a polarization hologram element and amount of light of each of polarized lights is detected. Then it is possible to read out the recorded polarization direction from the ratio of the detected amount of lights. That is, by changing the polarization direction of the recording light (linear polarized light) depending on the information to be recorded, the polarization direction can be recorded and reproduced as the multivalued information in the optical recording medium 1.

However, in case where the above described reproducing method is used, it causes problems that manufacturing of the polarization hologram element is difficult, and procurement of it is difficult, and the like. Then, the inventors make a study about a method that can reproduce the above described optical recording medium 1 without utilizing expensive optical member. As a result, it is discovered that the polarization direction which is recorded in the optical recording medium 1 can be read out with high accuracy by a method in that two linear polarized lights which have different polarization directions are irradiated to the optical recording medium 1 simultaneously or with a time interval, amount of light of the transmitted light which passes through the optical recording medium 1, is obtained for each of the two polarized lights, and polarization direction of the recording light is judged based on each of the obtained amount of light.

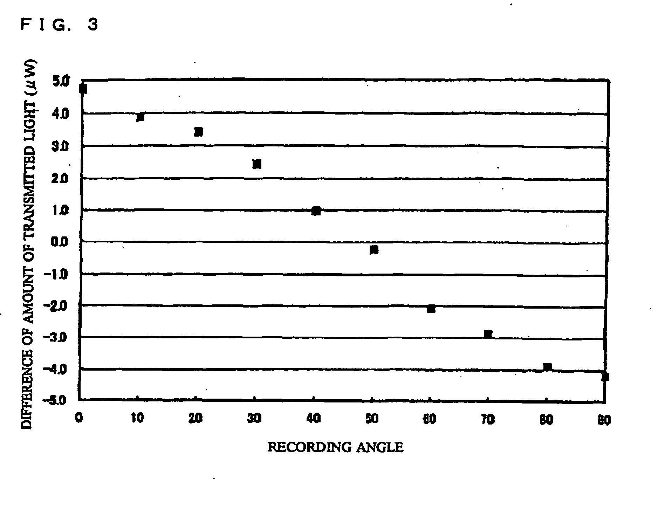

Fig. 3 is a graph to show dependency on the recording angle about a difference of the amount of transmitted light between the reproducing angle zero degree and the reproducing angle ninety degree. At this point, the terms reproducing angle and recording angle are used as the same meaning as the case of Fig. 2. As shown in Fig. 3, difference (difference value) of the amounts of transmitted light varies approximately linearly in response to the recording angle. As a result, first, relational expression that shows relation between the recording angle and the above described difference value, will be obtained in advance. Then the two polarized lights which have different polarization direction and which are the same as those used to obtain the relational expression, are irradiated on the optical recording medium 1, intensity of the transmitted lights is measured for each of them, and difference value of them is obtained. By these steps, the polarization direction (recording angle) of the polarized light that is recorded in the optical recording medium 1 can be read out using the relational expression which is obtained in advance.

In this case, because this structure uses the two polarized lights which have different polarization direction, accuracy can be improved in comparison with a case in which only one polarized light is irradiated on the optical recording medium 1, then recording angle is judged by the intensity of the transmitted light (it is possible at the least when Fig. 2 is referred).

At this point, above described embodiment shows the method in that difference value of the amounts of light which are obtained for the two polarized lights that pass the optical recording medium is searched, and the recorded polarization direction is judged. However, the present invention is not limited to the embodiment, and it is no problem that a method or the like is employed in that, for example, ratio of the amounts of light which is obtained for the two polarized lights that pass the optical recording medium is searched, and the recorded polarization direction is judged.

Further, in the above described embodiment, the two polarized lights which are irradiated in reproduction, are polarized lights that are orthogonal with each other (reproducing angle zero degree and reproducing angle ninety degree). However, the present invention is not intended to be limited to the embodiment, and it is no problem that a structure is employed in that the two polarized lights which have different polarization direction, are not orthogonal with each other. However, it is more preferable from a view point of reproduction accuracy or the like that the two polarized lights are in a state that their polarization directions are orthogonal with each other.

Next, a multivalued information reproducing apparatus to which the multivalued information reproducing method in accordance with the present invention is applied, will be explained by way of concrete embodiments shown below.

### [First Embodiment]

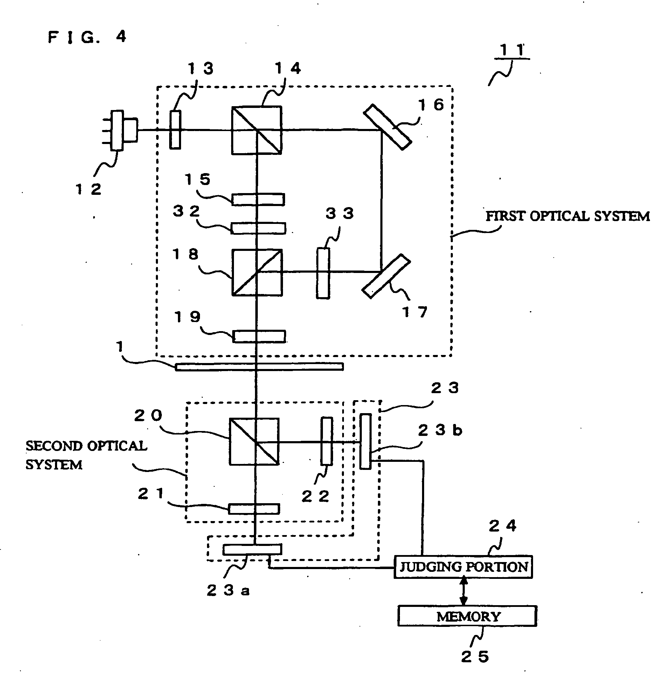

Fig. 4 is a schematic diagram to show a structure of a multivalued information reproducing apparatus 11 according to a first embodiment to which the multivalued information reproducing method in accordance with the present invention is applied. The multivalued information reproducing apparatus 11 is provided with a light source 12, a first optical system, a second optical system, a photo detecting portion 23, and a judging portion 24. The first optical system is composed of a collimator lens 13, a beam splitter 14, a half wavelength plate 15, a first reflecting mirror 16, a second reflecting mirror 17, a first light shielding member 32, a second light shielding member 33, a first polarization beam splitter 18, and an objective lens 19. The second optical system is composed of a second polarization beam splitter 20, a first condenser lens 21, and a second condenser lens 22.

The light source 12 is a semiconductor laser which emits a linear polarized light for reproduction. A polarization direction of the laser light which is emitted from the light source 12 is set in a prescribed direction (in this embodiment a direction which the above described reproducing angle becomes zero, however, this direction may be changed adequately). At this point, wavelength of the laser light emitted from the light source 12 is selected properly depending on absorption characteristics and the like of material used for the recording layer 3 of the optical recording medium 1.

The linear polarized light for reproduction emitted from the light source 12 is converted into parallel ray by the collimator lens 13, and it is separated such that light amount ratio of reflected light and transmitted light becomes one to one (1:1) by the beam splitter (first light separating element) 14. The linear polarized light which is reflected by the beam splitter 14 is input to the half wavelength plate (polarization direction converting element) 15. Because the half wavelength plate 15 is arranged in a state where its optical axis is slanted in forty five degree with respect to the input light, the polarization direction of the light which is output from the half wavelength plate 15 is rotated ninety degree. That is, because the reproducing angle of the linear polarized light for reproduction which is emitted from the light source 12 is zero degree, the reproducing angle of the linear polarized light which passes through the half wavelength plate 15 becomes ninety degree. Hereinafter the linear polarized light which has the reproducing angle of ninety degree is referred to as a first linear polarized light for the sake of convenience.

On the other hand, because the linear polarized light which passes through the beam splitter 14 is merely reflected by the first reflecting mirror 16 and the second reflecting mirror 17, its polarization direction stays in constant and the reproducing angle of it also stays in zero degree. Hereinafter the linear polarized light which has the reproducing angle of zero degree is referred to as a second linear polarized light for the sake of convenience. At this point, the first linear polarized light and the second linear polarized light are in relation to be orthogonal with each other.

At this point in the present embodiment, only one of two lights which are separated by the beam splitter 14, is rotated its polarized direction utilizing the half wavelength plate 15, and by this arrangement the two lights which are separated by the beam splitter 14 are made have the relation in that the polarization direction of them are orthogonal with each other. However, the present invention is not limited to the embodiment, and it is no problem that both of two lights which are separated by the beam splitter 14, are rotated their polarization directions utilizing the half wavelength plate, and the two lights which are separated by the beam splitter 14 are made have relation in that the polarization direction of them are orthogonal with each other. Further, as for a way to rotate the polarization direction, the present invention is not always intended to be limited to the way utilizing the half wavelength plate, and it is no problem of course that the rotation is performed utilizing other polarization rotating element or the like.

The first polarization beam splitter 18 is formed such that the first linear polarized light passes through it and the second linear polarized light is reflected by it. Then the first linear polarized light and the second linear polarized light are made have the same optical axes by the first polarization beam splitter 18. That is, the first polarization beam splitter 18 functions as an optical axis aligning element which aligns the optical axes of the first linear polarized light and the second linear polarized light.

At this point, the first linear polarized light and the second linear polarized light pass respectively the first light shielding member 32 or the second light shielding member 33 as it will be described later. The term "optical axis aligning" used here means that the optical axes of them become the same under an assumption that there are no these two light shielding members 32, 33.

The first light shielding member (light shielding element) 32 is arranged between the half wavelength plate 15 and the first polarization beam splitter 18, and the second light shielding member (light shielding element) 33 is arranged between the second reflecting mirror 17 and the first polarization beam splitter 18. Hereinafter the two light shielding members 32, 33 will be explained.

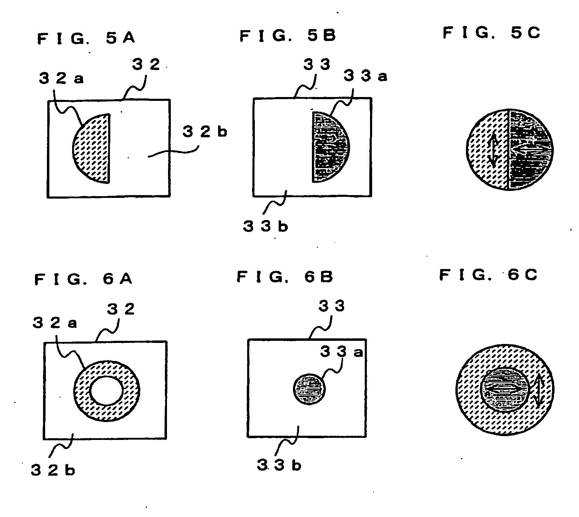

Fig. 5A - Fig. 5C are schematic diagrams to explain the first light shielding member 32 and the second light shielding member 33. Fig. 5A is a diagram to explain a structure of the first light shielding member 32, Fig. 5B is a diagram to explain a structure of the second light shielding member 33, and Fig. 5C is a diagram to show distribution of the first linear polarized light and the second linear polarized light in light which is output from the first polarization beam splitter 18.

As shown in Fig. 5A, the first light shielding member 32 has two areas of a first area 32a and a second area 32b. The first area 32a is an area through which the first linear polarized light passes and this area is formed to be a half circle shape. On the other hand the second area 32b is an area through which the first linear polarized light does not pass and this area is formed to surround the first area 32a. That is, the first light shielding member 32 does not shield all the first linear polarized light which is input to it, and it is made shield only a part of the first linear polarized light.

The first light shielding member 32 which is structured as above can be manufactured by, for example, combining two polarizing plates with their polarizing directions changed in the first area 32a and the second area 32b. Or it can be manufactured by sticking light shielding film or the like at a part to be shielded on glass plate.

As shown in Fig. 5B, the second light shielding member 33 has two areas of a first area 33a and a second area 33b. The first area 33a is an area through which the second linear polarized light passes and this area is formed to be a half circle shape that is inverse of the first area 32a of the first light shielding member 32. On the other hand the second area 33b is an area through which the second linear polarized light does no pass and this area is formed to surround the first area 33a. That is, the second light shielding member 33 does not shield all the second linear polarized light which is input to it, and it is made shield only a part of the second linear polarized light.

Further, the first light shielding member 32 and the second light shielding member 33 are adjusted and arranged such that the first linear polarized light and the second linear polarized light become lights which have distribution of the polarized light as shown in Fig. 5C when they pass the first polarization beam splitter 18. By this arrangement, the light which is output from the first polarization beam splitter 18, can be light including the two polarized lights that have different polarization direction.

At this point, shapes of the parts which are shielded by the first light shielding member 32 and the second light shielding member 33 are not limited to a structure shown in Fig. 5A - Fig. 5C, and various modifications can be introduced within a range which does not depart from the object of the present invention. That is, it is possible to form them as a structure shown in Fig. 6A - Fig. 6C, for example. Fig. 6A - Fig. 6C are schematic diagrams to show a modification example of the first light shielding member 32 and the second light shielding member 33. Fig. 6A is a diagram to show the modification example of the first light shielding member 32, Fig. 6B is a diagram to show the modification example of the second light shielding member 33, and Fig. 6C is a diagram to show distribution of the first linear polarized light and the second linear polarized light in light which is output from the first polarization beam splitter 18 in case where the shielding members shown in Fig. 6A and Fig. 6B are utilized.

The first linear polarized light and the second linear polarized light which are output from the first polarization beam splitter 18 are condensed on a recording layer 3 of the optical recording medium 1 (See, Fig. 1) by the objective lens 19. The first linear polarized light and the second linear polarized light which are input to the optical recording medium 1 pass the optical recording medium 1, then they have amount of the transmitted light in response to the polarization direction recorded in the optical recording medium 1. At this point because the first linear polarized light and the second linear polarized light are the linear polarized lights which are orthogonal with each other as above described, they show different transmission characteristics depending on the polarization direction that is recorded in the optical recording medium 1.

The second polarization beam splitter (second light separating element) 20 is formed to transmit the first linear polarized light and to reflect the second linear polarized light between the first linear polarized light and the second linear polarized light which are output from the optical recording medium 1. The first linear polarized light which passes through the second polarization beam splitter 20 is received via the first condenser lens 21 by the first photo detector 23a which composes the photo detecting portion 23. On the other hand the second linear polarized light which is reflected by the second polarization beam splitter 20 is received via the second condenser lens 22 by the second photo detector 23b which composes the photo detecting portion 23. The first photo detector 23a and the second photo detector 23b convert the received light information into electric signal.

The amount of light of the first linear polarized light which is received by the first photo detector 23a and the amount of light of the second linear polarized light which is received by the second photo detector 23b are output to the judging portion 24 which is composed of, for example, a micro processor or the like in a form of electric signal. From the obtained amount of light of the first linear polarized light and the amount of light of the second linear polarized light, the judging portion 24 obtains difference value of them or ratio of them. The judging portion 24 judges which direction the polarization direction that is recorded in the optical recording medium 1 shows based on information which is stored in advance in a memory 25 that is connected to the judging portion 24.

At this point, the information stored in advance in the memory 25 is information which is obtained, for example, as below. First, a reference optical recording medium is prepared on which a plurality of prescribed polarization directions are recorded. Then, reproducing light is irradiated on the reference optical recording medium utilizing the multivalued information reproducing apparatus 11, and amount of lights of the first linear polarized light and the second linear polarized light are measured. The difference value or ratio of these values is searched from the obtained amounts of lights of the first linear polarized light and the second linear polarized light. Relation between the obtained difference value or ratio and the polarization direction which is known in advance is plotted, then the relational expression between the polarization direction and the difference value (or ratio) is searched. The resulted relational expression is stored in the memory 25. By these steps, the polarization direction which is recorded in the optical recording medium 1 can be measured by the judging portion 24 from the obtained amount of light of the first linear polarized light and the amount of light of the second linear polarized light.

At this point in the present embodiment, a structure is employed in that ratio of amounts of two lights which are separated by the beam splitter 14 becomes one to one, and the first linear polarized light and the second linear polarized light lose their halves of amount of light respectively by the first light shielding member 32 and the second light shielding member 33. However, the present invention is not intended to be limited to the embodiment, and they may be appropriately changed.

Further in the present embodiment, the first linear polarized light is defined as the reproducing angle ninety degree, and the second linear polarized light is defined as the reproducing angle zero degree. However, the present invention is not intended to be limited to the embodiment. It is no problem a structure is employed in that the first linear polarized light and the second linear polarized light have relation which they are orthogonal with each other having different angles. Further, a structure can be employed in that the first linear polarized light and the second linear polarized light that have different polarization directions, have relation which they are not orthogonal with each other.

By structuring the multivalued information reproducing apparatus 11 as above described, the optical recording medium 1 on which the polarization direction of the recording light is recorded as the multivalued information, can be reproduced with high accuracy. Further, it is easy to manufacture the multivalued information reproducing apparatus because it is not necessary to utilize the optical parts and the like that require particularly much cost to manufacture.

### [Second Embodiment]

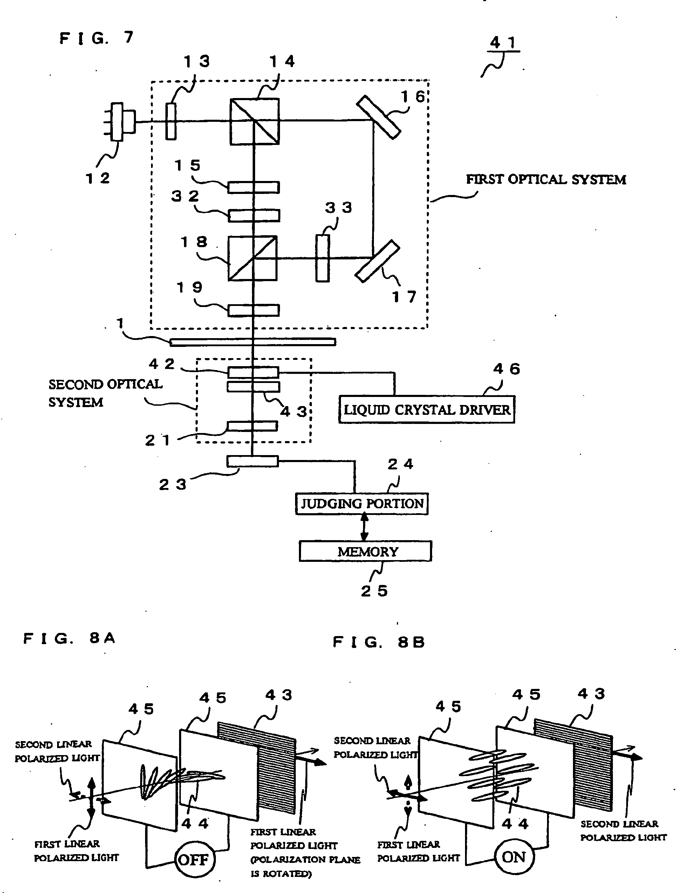

Next, a multivalued information reproducing apparatus according to a second embodiment will be explained. For the sake of convenience, the same parts of the multivalued information reproducing apparatus as the apparatus 11 of the first embodiment, will be given the same reference numerals and explanation for them will be omitted when it is not necessary particularly. Fig. 7 is a schematic diagram to show a structure of the multivalued information reproducing apparatus 41 according to second embodiment.

The multivalued information reproducing apparatus 41 according to the second embodiment has the same structure in the first optical system as the multivalued information reproducing apparatus 11 according to the first embodiment, however, it has different structure in the second optical system. By this difference in the second optical system, the multivalued information reproducing apparatus 41 according to the second embodiment is different from that of the first embodiment even in a point that number of the photo detector (reference numeral 23 is given in this embodiment) of the photo detecting portion 23 is only one.

The second optical system of the multivalued information reproducing apparatus 41 is composed of a liquid crystal element 42, a polarizing plate 43, and a condenser lens 21. Fig. 8A and Fig. 8B are schematic diagrams to explain about the liquid crystal element 42 and the polarizing plate 43 which are included in the second optical system. As shown in Fig. 8A and Fig. 8B, the liquid crystal element 42 has a liquid crystal 44 and two transparent electrodes 45 to sandwich the liquid crystal 44. The liquid crystal 44 which is included in the liquid crystal element 42 is in a state that orientation direction of molecule is twisted in ninety degree between an input side (left side of Fig. 8A) and an output side (right side of Fig. 8B) of the light by an orientation film which is not shown (TN type liquid crystal). The transparent electrodes 45 are electrically connected to a liquid crystal driver 46 (See, Fig. 7), and they are controlled ON and OFF by the liquid crystal driver 46.

When voltage is not applied on the transparent electrodes 45 (a state where the liquid crystal element 42 is OFF in Fig. 8A), the orientation direction of the liquid crystal 44 is in the state twisted in ninety degree between the input side and the output side as above described. Because of this, the first linear polarized light which passes through the optical recording medium 1 is rotated its polarization direction in ninety degree by optical rotatory power of the liquid crystal 44. At this point, the polarizing plate 43 is structured such that it transmits light which is parallel to the polarization direction of the second linear polarized light before it is input to the liquid crystal element 42, and it does not transmit other lights. As a result, the first linear polarized light whose polarization direction is rotated in ninety degree, can pass through the polarizing plate 43. However, the second linear polarized light which passed through the optical recording medium 1 cannot pass the polarizing plate 43 because it is shielded by the liquid crystal element 42.

On the other hand, when voltage is applied to the transparent electrodes 45 (a state where the liquid crystal element 42 is ON in Fig. 8B), the orientation direction of the liquid crystal 44 is changed to a direction which is parallel to traveling direction of the light. Because of this, both of the first linear polarized light and the second linear polarized light which passes through the optical recording medium 1, can pass the liquid crystal element 42 and can be input to the polarizing plate 43. The polarizing plate 43 makes only the second linear polarized light pass because it is structured such that it transmit light which is parallel to the polarization direction of the second linear polarized light, and it does not transmit other lights.

As above described, by controlling the liquid crystal element 42 in ON and OFF, it is possible to direct only one of the first linear polarized light and the second linear polarized light which passes through the optical recording medium 1 to the photo detector 23 via the condenser lens 21. As a result, it becomes possible to obtain amounts of lights of the first linear polarized light and the second linear polarized light by the photo detector 23 in a separated state by performing ON or OFF of the liquid crystal element 42 at a prescribed timing when reading of the polarization direction which is recorded as the multivalued information is performed.

Because of this, amounts of lights of respective polarized lights are obtained by the photo detector 23 about the cases where the liquid crystal element 42 which are controlled in ON and OFF in the prescribed timing, are ON and OFF, and the judging portion 24 performs calculating process using the respective amounts of lights which are obtained for the respective polarized lights by the same manner as the first embodiment, so it becomes possible to perform judgment of the polarization direction which is recorded in the optical recording medium 1. By these steps, reproducing of the optical recording medium 1 on which the polarization direction is recorded as the multivalued information becomes possible.

At this point, in a state where the voltage which is applied to the liquid crystal element 42 is OFF (a state shown in Fig. 8A), a part of the second linear polarized light may pass through the liquid crystal element 42 and the polarizing plate 43. In such case, amount of light of the first linear polarized light increases much more than actual value. To consider this point, it is preferable that a rate which the second linear polarized light passes the liquid crystal element 42 and the polarizing plate 43 when the liquid crystal element 42 is OFF, is measured in advance, and amount of light of the first linear polarized light is corrected using the rate. That is, it is no problem that amount of light which is obtained much more than the actual value by interfusion of the second linear polarized light to the first linear polarized light, is calculated from the amount of light of the second linear polarized light when the liquid crystal element 42 which is utilized for the above described calculation process is ON, and the above described rate which is obtained by measurement in advance, then, the increased amount of light is subtracted from the obtained amount of light by the photo detector 23 to calculate the amount of light of the first linear polarized light.

Further in the present embodiment, a structure is employed in that the first linear polarized light and the second linear polarized light are measured alternatively on the photo detector 23 by arranging the liquid crystal element 42 and the polarizing plate 43 in the second optical system. However, the present invention is not limited to the structure and various modifications can be introduced within a range that does not depart from the object of the present invention. That is, it is no problem that any structure can be employed as far as the structure can (alternatively) obtain the first linear polarized light and the second linear polarized light with a time interval, and, for example, a structure can be employed in that a light-space modulator or the like is utilized.

### [Third Embodiment]

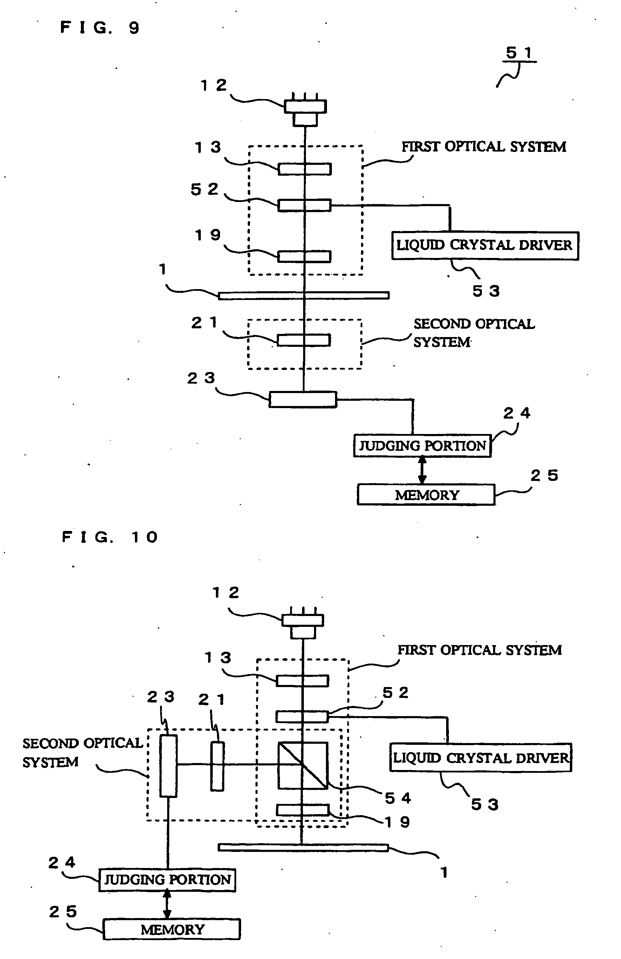

Next, a multivalued information reproducing apparatus according to a third embodiment will be explained. For the sake of convenience, the same parts of the multivalued information reproducing apparatus as those of the multivalued information reproducing apparatus 11 in the first embodiment will be given the same reference numerals and explanation for them will be omitted when it is not necessary particularly. Fig. 9 is a schematic diagram to show a structure of a multivalued information reproducing apparatus 51 according to the third embodiment.

The multivalued information reproducing apparatus 51 according to the third embodiment is provided with a light source 12, a first optical system, a second optical system, a photo detector 23, and a judging portion 24. The first optical system is composed of a collimator lens 13, a liquid crystal element 52, and an objective lens 19. The second optical system is composed of a condenser lens 21. The liquid crystal element 52 has a similar structure as the liquid crystal element 42 of the second embodiment shown in Fig. 8. However, the liquid crystal element 52 is arranged in the first optical system in a state where the liquid crystal element 42 in the second embodiment is rotated ninety degree. Further, the liquid crystal element 52 is electrically connected with the liquid crystal driver 53 to be controlled in ON and OFF.

The linear polarized light with the reproducing angle zero degree which is emitted from the light source 12 is rotated its polarization direction ninety degree in response to the orientation direction of the liquid crystal molecule of the liquid crystal element 52 when the liquid crystal element 52 is in OFF state. This linear polarized light is defined as the first linear polarized light as the first embodiment. On the other hand the linear polarized light with the reproducing angle zero degree which is emitted from the light source 12, passes through the liquid crystal element 52 without being its polarization direction rotated because the liquid crystal molecule of the liquid crystal element 52 is orientated in the optical axis direction when the liquid crystal element 52 is in ON state. The linear polarized light which has the polarization direction the same as the linear polarized light which is emitted from the light source 12, is defined as the second linear polarized light as the first embodiment.

That is, in a case of the multivalued information reproducing apparatus 51 according to the third embodiment, the light which is input to the optical recording medium 1 via the objective lens 19, can be switched to the first linear polarized light and the second linear polarized light that are orthogonal with each other by ON and OFF control of the liquid crystal element 52 in the first optical system.

By this arrangement, the light which passes the optical recording medium 1 and is directed to the photo detector 23 via the condenser lens 21, can be the first linear polarized light and the second linear polarized light that are changed alternatively by ON and OFF control of the liquid crystal element 52. As a result, it becomes possible to obtain amounts of lights of the first linear polarized light and the second linear polarized light by the photo detector 23 in a separated state by performing ON or OFF of the liquid crystal element 52 at a prescribed timing when reading of the polarization direction which is recorded as the multivalued information is performed.

In this case it becomes possible for the judging portion 24 to perform judgment of the polarization direction which is recorded in the optical recording medium 1 as a similar manner as the first embodiment by the calculating process based on the respective amounts of lights which are obtained by the photo detector 23 for the respective polarized light for cases the liquid crystal element 52 is in the ON and OFF states. By these steps, reproducing of the optical recording medium 1 on which the polarization direction is recorded as the multivalued information becomes possible.

At this point, in case of this embodiment a structure is employed in that the liquid crystal element 52 is arranged in the first optical system, so the first linear polarized light and the second linear polarized light are generated with a time interval using the linear polarized light which is emitted from the light source 12. However, the present invention is not intended to be limited to this embodiment, and various modifications can be introduced without departing the object of the present invention. That is, it is no problem that a structure is employed in that a half wavelength plate which is set up rotatably is arranged instead of the liquid crystal element 52 depending on the cases. However, in such a case there is a possibility that reproducing speed is limited, and it is preferable that the liquid crystal element 52 is arranged as the present embodiment.

### [Others]

In the all three embodiments described above, a method is shown in that the multivalued information is reproduced using the transmitted light which passes the optical recording medium 1. However, the present invention is not intended to be limited to this embodiment. That is, the optical recording medium 1 shows the anisotropy in absorption intensity of the light when the polarization direction of the recording light is recorded as above described. Because of this, it is of course no problem that a method is used in that the multivalued information is reproduced using reflection light which is reflected by the optical recording medium 1. In such a case a reflection layer is required to be set up between the substrate 2 and the recording layer 3 of the optical recording medium 1 shown in Fig. 1.

Fig. 10 is a schematic diagram to show a multivalued information reproducing apparatus of a method to reproduce the multivalued information using the reflection light. A method is employed in that the reflection light is used instead of the transmitted light of the multivalued information reproducing apparatus 51 in the third embodiment. As shown in Fig. 10, the reflection light can be directed to the photo detector 23 by arranging the beam splitter 54 in an optical path. In case of this structure, the beam splitter 54 and the objective lens 19 are common optical elements of the first optical system and the second optical system.

By the multivalued information reproducing method or the multivalued information reproducing apparatus in accordance with the present invention, reproducing of the multivalued information becomes possible without utilizing the expensive optical members for the optical recording medium in which the polarization direction is recorded as the multivalued information by changing the polarization direction of the linear polarized light which is used as the recording light in response to the information to be recorded. As a result, the present invention is useful as a multivalued information reproducing method and a multivalued information reproducing apparatus.

## Claims

1. A multivalued information reproducing apparatus (11) comprising:
a light source (12);
a first optical system which makes light emitted from the light source (12) input to an optical recording medium (1) in which the polarization directions of recording lights are recorded as multivalued information;
a second optical system by which light that passes the optical recording medium (1) or light that is reflected by the optical recording medium (1) is directed to a photo detecting portion (23);
a polarization direction judging portion (24) which judges the polarization direction that is recorded in the optical recording medium (1);
**characterized in that**
the light source (12) emits a linear polarized light having a prescribed polarization direction;
the first optical system generates a first linear polarized light and a second linear polarized light that have different polarization directions using the linear polarized light which is emitted from the light source (12) and makes the two polarized lights input to an optical recording medium (1);
the second optical system directs the light that passes the optical recording medium (1) or light that is reflected by the optical recording medium (1) to the photo detecting portion (23) in a state where the first linear polarized light and the second linear polarized light are separated; and
the polarization direction judging portion (24) judges the polarization direction that is recorded in the optical recording medium (1) based on amount of light of the first linear polarized light and amount of light of the second linear polarized light that are obtained by the photo detecting portion (23).

2. The multivalued information reproducing apparatus according to claim 1, **characterized in that** the first optical system makes the first linear polarized light and the second linear polarized light input simultaneously to the optical recording medium (1).

3. The multivalued information reproducing apparatus according to claim 1 or 2, **characterized in that** the first optical system includes:
a first light separating element (14) which separates the linear polarized light that is emitted from the light source into two lights;
a polarization direction converting element (15) which is arranged so as to converts the polarization direction of at least one of the two lights that are separated by the first light separating element (14) and to make one of the two lights be the first linear polarized light and the other of the two lights be the second linear polarized light;
an optical axis aligning element (18) which aligns the optical axes of the first linear polarized light and the second linear polarized light; and
a light shielding element (32) which is arranged in front of the optical axis aligning element (18) to shield a part of the respective lights such that the first linear polarized light and the second linear polarized light are not superimposed when the optical axes of them are aligned.

4. The multivalued information reproducing apparatus according to claim 2 or claim 3, **characterized in that** the second optical system includes a second light separating element (20) which separates the first linear polarized light and the second linear polarized light into different light paths, and the photo detecting portion (23) is composed of two photo detectors (23a, 23b) that are arranged in different positions.

5. The multivalued information reproducing apparatus according to claim 2 or claim 3, **characterized in that** the second optical system directs the first linear polarized light and the second linear polarized light to the photo detecting portion with a time interval.

6. The multivalued information reproducing apparatus according to claim 5, **characterized in that** the second optical system includes a liquid crystal element (42) which contains a liquid crystal (44) and two transparent electrodes (45) to sandwich the liquid crystal (44), and a polarizing plate (43).

7. The multivalued information reproducing apparatus according to claim 1, **characterized in that** the first optical system makes the first linear polarized light and the second linear polarized light input to the optical recording medium (1) with a time interval.

8. The multivalued information reproducing apparatus according to claim 7, **characterized in that** the first optical system includes a liquid crystal element (52) which contains a liquid crystal and two transparent electrodes to sandwich the liquid crystal.

9. The multivalued information reproducing apparatus according to at least one of claims 1 to 7, **characterized in that** the first linear polarized light and the second linear polarized light have the polarization directions that are orthogonal with each other.

10. A method to reproduce multivalued information that is recorded on an optical recording medium, the method comprising:
a first step to irradiate light on the optical recording medium (1) in which the polarization directions of recording lights are recorded as the multivalued information;
a second step to direct light that passes the optical recording medium (1) or light that is reflected by the optical recording medium (1) to a photo detecting portion (23);
and a third step to judge the polarization direction that is recorded in the optical recording medium (1),
**characterized in that**
in the first step a first linear polarized light and a second linear polarized light which have different polarization directions are irradiated simultaneously or with a time interval on the optical recording medium (1) in the first step;
in the second step the light that passes the optical recording medium (1) or the light that is reflected by the optical recording medium (1) is directed to the photo detecting portion (23) in the second step in a state where the first linear polarized light and the second linear polarized light are separated; and
in the third step the polarization direction that is recorded in the optical recording medium (1) is judged based on amount of light of the first linear polarized light and amount of light of the second linear polarized light that are obtained by the photo detecting portion (23).

## Patentansprüche

1. Vorrichtung zur Wiedergabe mehrwertiger Informationen (11), die umfasst:
eine Lichtquelle (12);
ein erstes optisches System, das das Licht, das von der Lichtquelle (12) emittiert wird, einem optischen Aufzeichnungsmedium (1) zuführt, in dem die Polarisationsrichtungen der aufzeichnenden Lichtstrahlen als mehrwertige Informationen aufgezeichnet werden;
ein zweites optisches System, das das Licht, das durch das optische Aufzeichnungsmedium (1) hindurch tritt, oder das Licht,
das von dem optischen Aufzeichnungsmedium (1) reflektiert wird, zu einem Photodetektionsbereich (23) lenkt;
einen Bereich zur Beurteilung der Polarisationsrichtung (24), der die Polarisationsrichtung beurteilt, die in dem optischen Aufzeichnungsmedium (1) aufgezeichnet wird;
**dadurch gekennzeichnet, dass**
die Lichtquelle (12) ein linear polarisiertes Licht emittiert, das eine vorgegebene Polarisationsrichtung hat;
das erste optische System unter Verwendung des linear polarisierten Lichts, das von der Lichtquelle (12) emittiert wird, ein erstes linear polarisiertes Licht und ein zweites linear polarisiertes Licht, die verschiedene Polarisationsrichtungen haben, erzeugt und die beiden polarisierten Lichtstrahlen einem optischen Aufzeichnungsmedium (1) zuführt;
das zweite optische System das Licht, das durch das optische Aufzeichnungsmedium (1) hindurch tritt, oder das Licht, das von dem optischen Aufzeichnungsmedium (1) reflektiert wird, in einem Zustand zu dem Photodetektionsbereich (23) lenkt, in dem das erste linear polarisierte Licht und das zweite linear polarisierte Licht aufgeteilt sind; und
der Bereich zur Beurteilung der Polarisationsrichtung (24) die Polarisationsrichtung, die in dem optischen Aufzeichnungsmedium (1) aufgezeichnet ist, auf der Basis der Lichtmenge des ersten linear polarisierten Lichts und der Lichtmenge des zweiten linear polarisierten Lichts, die durch den Photodetektionsbereich (23) erhalten werden, beurteilt.

2. Vorrichtung zur Wiedergabe mehrwertiger Informationen (11) nach Anspruch 1, **dadurch gekennzeichnet, dass** das erste optische System das erste linear polarisierte Licht und das zweite linear polarisierte Licht gleichzeitig dem optischen Aufzeichnungsmedium (1) zuführt.

3. Vorrichtung zur Wiedergabe mehrwertiger Informationen (11) nach Anspruch 1 oder 2, **dadurch gekennzeichnet, dass** das erste optische System einschließt:
ein erstes Licht aufteilendes Element (14), das das linear polarisierte Licht, das von der Lichtquelle emittiert wird, in zwei Lichtstrahlen aufteilt;
ein die Polarisationsrichtung änderndes Element (15), das so angeordnet ist, dass es die Polarisationsrichtung von mindestens einem der beiden Lichtstrahlen ändert, die von dem ersten Licht aufteilenden Element (14) aufgeteilt werden, und dass es einen der beiden Lichtstrahlen zu dem ersten linear polarisierten Licht und den anderen der beiden Lichtstrahlen zu dem zweiten linear polarisierten Licht macht,
ein die optische Achse ausrichtendes Element (18), das die optischen Achsen des ersten linear polarisierten Lichts und des zweiten linear polarisierten Lichts ausrichtet; und
ein Licht abschirmendes Element (32), das vor dem die optische Achse ausrichtenden Element (18) angeordnet ist, um einen Teil der einzelnen Lichtstrahlen so abzuschirmen, dass das erste linear polarisierte Licht und das zweite linear polarisierte Licht einander nicht überlagern, wenn ihre optischen Achsen ausgerichtet sind.

4. Vorrichtung zur Wiedergabe mehrwertiger Informationen nach Anspruch 2 oder Anspruch 3, **dadurch gekennzeichnet, dass** das zweite optische System ein zweites Licht aufteilendes Element (20) einschließt, das das erste linear polarisierte Licht und das zweite linear polarisierte Licht in zwei verschiedene Lichtwege aufteilt, und dass der Photodetektionsbereich (23) aus zwei Photodetektoren (23a, 23b) zusammengesetzt ist, die in verschiedenen Positionen angeordnet sind.

5. Vorrichtung zur Wiedergabe mehrwertiger Informationen nach Anspruch 2 oder Anspruch 3, **dadurch gekennzeichnet, dass** das zweite optische System das erste linear polarisierte Licht und das zweite linear polarisierte Licht mit einem zeitlichen Abstand zu dem Photodetektionsbereich lenkt.

6. Vorrichtung zur Wiedergabe mehrwertiger Informationen nach Anspruch 5, **dadurch gekennzeichnet, dass** das zweite optische System ein Flüssigkristallelement (42), das einen Flüssigkristall (44) und zwei transparente Elektroden (45) enthält, die ein Sandwich um den Flüssigkristall (44) bilden, und eine polarisierende Platte (43) einschließt.

7. Vorrichtung zur Wiedergabe mehrwertiger Informationen nach Anspruch 1, **dadurch gekennzeichnet, dass** das erste optische System das erste linear polarisierte Licht und das zweite linear polarisierte Licht dem optischen Aufzeichnungsmedium (1) mit einem zeitlichen Abstand zuführt.

8. Vorrichtung zur Wiedergabe mehrwertiger Informationen nach Anspruch 7, **dadurch gekennzeichnet, dass** das erste optische System ein Flüssigkristallelement (52) einschließt, das einen Flüssigkristall und zwei transparente Elektroden, die ein Sandwich um den Flüssigkristall bilden, enthält.

9. Vorrichtung zur Wiedergabe mehrwertiger Informationen nach mindestens einem der Ansprüche 1 bis 7, **dadurch gekennzeichnet, dass** das erste linear polarisierte Licht und das zweite linear polarisierte Licht Polarisationsrichtungen haben, die orthogonal zueinander sind.

10. Verfahren zur Wiedergabe mehrwertiger Informationen, die auf einem optischen Aufzeichnungsmedium aufgezeichnet sind, wobei das Verfahren umfasst:
einen ersten Schritt, in dem das optische Aufzeichnungsmedium (1) mit Licht bestrahlt wird, wobei die Polarisationsrichtungen der aufzeichnenden Lichtstrahlen als die mehrwertigen Informationen in dem optischen Aufzeichnungsmedium aufgezeichnet werden,
einen zweiten Schritt, in dem das Licht, dass durch das optische Aufzeichnungsmedium (1) hindurch tritt, oder das Licht, das von dem optischen Aufzeichnungsmedium (1) reflektiert wird, zu einem Photodetektionsweisbereich (23) gelenkt wird,
und einen dritten Schritt, in dem die Polarisationsrichtung beurteilt wird, die in dem optischen Aufzeichnungsmedium (1) aufgezeichnet wird,
**dadurch gekennzeichnet, dass**
in dem ersten Schritt das optische Aufzeichnungsmedium (1) gleichzeitig oder mit einem zeitlichen Abstand mit einem ersten linear polarisierten Licht und einem zweiten linear polarisierten Licht, die unterschiedliche Polarisationsrichtungen haben, in dem ersten Schritt bestrahlt wird,
in dem zweiten Schritt das Licht, das durch das optische Aufzeichnungsmedium (1) hindurch tritt, oder das Licht, das von dem optischen Aufzeichnungsmedium (1) reflektiert wird, in dem zweiten Schritt in einem Zustand, in dem das erste linear polarisierte Licht und das zweite linear polarisierte Licht aufgeteilt sind, zu dem Photodetektionsbereich (23) gelenkt werden; und
in dem dritten Schritt die Polarisationsrichtung, die in dem optischen Aufzeichnungsmedium (1) aufgezeichnet ist, auf der Basis der Lichtmenge des ersten linear polarisierten Lichts und der Lichtmenge des zweiten linear polarisierten Lichts, die durch den Photodetektionsbereich (23) erhalten werden, beurteilt wird.

## Revendications

1. Appareil de reproduction de données multivalentes (11), comprenant :
une source lumineuse (12) ;
un premier système optique qui fait entrer la lumière émise par la source lumineuse (12) dans un support d'enregistrement optique (1) sur lequel les directions de polarisation des lumières d'enregistrement sont enregistrées sous la forme de données multivalentes ;
un deuxième système optique par lequel la lumière qui passe dans le support d'enregistrement optique (1) ou la lumière qui est réfléchie par le support d'enregistrement optique (1) est dirigée dans une partie photo-détection (23) ;
une partie évaluation de la direction de polarisation (24) qui évalue la direction de polarisation qui est enregistrée sur le support d'enregistrement optique (1) ;
**caractérisé en ce que**
la source lumineuse (12) émet une lumière polarisée linéairement ayant une direction de polarisation prédéterminée ;
le premier système optique génère une première lumière polarisée linéairement et une deuxième lumière polarisée linéairement qui ont des directions de polarisation différentes en utilisant la lumière polarisée linéairement qui est émise par la source lumineuse (12) et fait entrer les deux lumières polarisées dans un support d'enregistrement optique (1) ;
le deuxième système optique dirige la lumière qui passe dans le support d'enregistrement optique (1) ou lumière qui est réfléchie par le support d'enregistrement optique (1) dans la partie photo-détection (23) dans un état où la première lumière polarisée linéairement et la deuxième lumière polarisée linéairement sont séparées ; et
la partie évaluation de la direction de polarisation (24) évalue la direction de polarisation qui est enregistrée sur le support d'enregistrement optique (1) sur la base de la quantité de lumière de la première lumière polarisée linéairement et de la quantité de lumière de la deuxième lumière polarisée linéairement qui sont obtenues par la partie photo-détection (23).

2. L'appareil de reproduction de données multivalentes selon la revendication 1, **caractérisé en ce que** le premier système optique fait entrer simultanément la première lumière polarisée linéairement et la deuxième lumière polarisée linéairement dans le support d'enregistrement optique (1).

3. L'appareil de reproduction de données multivalentes selon la revendication 1 ou 2, **caractérisé en ce que** le premier système optique comprend :
un premier élément séparateur de lumière (14) qui sépare la lumière polarisée linéairement qui est émise par la source lumineuse en deux lumières ;
un élément convertissant la direction de polarisation (15) qui est disposé de manière à convertir la direction de polarisation d'au moins une des deux lumières qui sont séparées par le premier élément séparateur de lumière (14) et qui permet à l'une des deux lumières d'être la première lumière polarisée linéairement et à l'autre des deux lumières d'être la deuxième lumière polarisée linéairement ;
un élément alignant l'axe optique (18) qui aligne les axes optiques de la première lumière polarisée linéairement et de la deuxième lumière polarisée linéairement ; et
un élément de protection contre la lumière (32) qui est disposé en face de l'élément alignant l'axe optique (18) pour protéger une partie des lumières respectives de sorte que la première lumière polarisée linéairement et la deuxième lumière polarisée linéairement ne sont pas superposées quand leurs axes optiques sont alignés.

4. L'appareil de reproduction de données multivalentes selon la revendication 2 ou la revendication 3, **caractérisé en ce que** le deuxième système optique comprend un deuxième élément séparateur de lumière (20) qui sépare la première lumière polarisée linéairement et la deuxième lumière polarisée linéairement en deux trajets lumineux différents et la partie photo-détection (23) est constituée de deux photo-détecteurs (23a, 23b) qui sont disposés dans des positions différentes.

5. L'appareil de reproduction de données multivalentes selon la revendication 2 ou la revendication 3, **caractérisé en ce que** le deuxième système optique dirige la première lumière polarisée linéairement et la deuxième lumière polarisée linéairement dans la partie photo-détection avec un intervalle de temps.

6. L'appareil de reproduction de données multivalentes selon la revendication 5, **caractérisé en ce que** le deuxième système optique comprend un élément à cristal liquide (42) qui contient un cristal liquide (44) et deux électrodes transparentes (45) pour prendre en sandwich le cristal liquide (44) et une plaque de polarisation (43).

7. L'appareil de reproduction de données multivalentes selon la revendication 1, **caractérisé en ce que** le premier système optique fait entrer la première lumière polarisée linéairement et la deuxième lumière polarisée linéairement dans le support d'enregistrement optique (1) avec un intervalle de temps.

8. L'appareil de reproduction de données multivalentes selon la revendication 7, **caractérisé en ce que** le premier système optique comprend un élément à cristal liquide (52) qui contient un cristal liquide et deux électrodes transparentes pour prendre en sandwich le cristal liquide.

9. L'appareil de reproduction de données multivalentes selon au moins l'une des revendications 1 à 7, **caractérisé en ce que** la première lumière polarisée linéairement et la deuxième lumière polarisée linéairement ont des directions de polarisation qui sont orthogonales l'une par rapport à l'autre.

10. Procédé de reproduction de données multivalentes qui sont enregistrées sur un support d'enregistrement optique, le procédé comprenant :
une première étape consistant à irradier de lumière le support d'enregistrement optique (1) sur lequel les directions de polarisation des lumières d'enregistrement sont enregistrées sous forme de données multivalentes ;
une deuxième étape consistant à diriger la lumière qui passe dans le support d'enregistrement optique (1) ou la lumière qui est réfléchie par le support d'enregistrement optique (1) dans une partie photo-détection (23) ;
et une troisième étape consistant à évaluer la direction de polarisation qui est enregistrée sur le support d'enregistrement optique (1),
**caractérisé en ce que**
dans la première étape, une première lumière polarisée linéairement et une deuxième lumière polarisée linéairement qui ont des directions de polarisation différentes irradient simultanément ou bien avec un intervalle de temps le support d'enregistrement optique (1) dans la première étape ;
dans la deuxième étape, la lumière qui passe dans le support d'enregistrement optique (1) ou la lumière qui est réfléchie par le support d'enregistrement optique (1) est dirigée vers la partie photo-détection (23) dans la deuxième étape, dans un état où la première lumière polarisée linéairement et la deuxième lumière polarisée linéairement sont séparées ; et
dans la troisième étape, la direction de polarisation qui est enregistrée sur le support d'enregistrement optique (1) est évaluée sur la base de la quantité de lumière de la première lumière polarisée linéairement et la quantité de lumière de la deuxième lumière polarisée linéairement qui sont obtenues par la partie photo-détection (23).
